# EUROPEAN PATENT APPLICATION

(11) **EP 0 681 125 A1**
(43) Date of publication of application: **08.11.1995**
(21) Application number: 95302892.5
(22) Date of filing: 28.04.1995
(51) Int. Cl.: F16J 15/20

(54) **Continuous graphite ribbon in filament wrapping and method of producing same**

(30) Priority: 05.05.1994 US 238386
(71) Applicant: POLYCARBON, INC., Valencia, California 91355 (US)
(72) Inventor: Hayward, Tommie P., Saugus, California 91350 (US); Sterry, John Patrick, Northridge, California 91324 (US)
(74) Representative: Thomson, Paul Anthony

(57) **Abstract**

The present invention relates to a packing material made from a continuous roll of graphite ribbon made from graphite foil. The ribbon is texturized to enhance its strength and makes it less brittle for twisting and flexing in an apparatus which compresses the strip at regular intervals along its length. A plurality of strands of graphite ribbon are overwrapped in a commercial overwrap machine with yarn, coated with a graphite or carbon suspension, and then dried.

## Description

### BACKGROUND OF THE INVENTION

### 1. FIELD OF THE INVENTION:

The invention relates to a braided graphite material as a sealing material for gland packings, and the like, and more particularly, to a braided graphite packing material made of continuous filaments of expanded graphite foil material, and the process for producing such braided graphite material.

### 2. ART BACKGROUND:

Various gland packing materials made of flexible graphite have been used as gland packings for sealing shafts typically for hydraulic and pneumatic devices. These gland packing materials can be manufactured by a variety of different techniques including lamination, die molding, ribbon packing, and the like. A primary problem with prior art gland packing material is that the flexible graphite material from which all of these gland packings are made has a low tensile strength and is therefore brittle. It is thus relatively difficult to handle and maneuver, and may pose difficulty when such packing requires replacement.

One example of gland packing material is described in U.S. Patent No. 4,559,862 which discloses a packing material made of glass or other inorganic fibers in combination with organic fibers such as PTFE, Aramid, graphite, carbon, nylon or rayon, which may be impregnated with a lubricant. The patent suggests that the fibers could be cross-locked, which is understood to mean braided. However, the use of the specified organic fibers is believed to be disadvantageous because such materials lose volume over time, and under high temperature conditions. Thus, it would be advantageous to have a braided graphite gland packing with a minimum of organic material or fibers disposed therewithin.

One proposed prior art solution to the problem of creating graphite gland packing in a braided form has been proposed by Ueda et al., U.S. Patent Nos. 4,705,722 and 5,134,030. This gland packing uses a plurality of flexible graphite sheets cut to a width of less than 5 mm and laid superimposed to each other, and then covered with a fiber material by knitting or braiding to form a knitted thread that is braided around the graphite sheets. The '030 patent is essentially the same, but also includes the step of laminating the flexible graphite sheet with at least one reinforcing fiber or a foil material.

Another prior art gland packing material is described in U.S. Patent No. 4,961,988 which discloses a gland packing of expanded graphite including mainly the vermiform laminate of expanded graphite and other material which is embedded into the vermiform laminae and bonded together with an organic adhesive.

A major drawback of many of these prior art materials is that the inclusion of a substantial amount of organic material in the packing will cause the packing to degrade over time. The life of the material is important because the cost of replacing the packing is relatively expensive. On the other hand, the materials which are made primarily of graphite are very brittle. It is therefore difficult to handle such materials, and particularly difficult to make large quantities of such packing at a reasonable price. Ueda addresses the problem by using small strips of graphite sheets which are less brittle because of their limited length, but it is difficult to handle these strips, and the construction of a braid requires many such strips, so the cost of packing made from this material is rather high.

These and other deficiencies in the prior art are resolved by the present invention which provides a packing material, and a method for making same.

### SUMMARY OF THE INVENTION

The present invention relates to a braided packing material made from an expanded graphite foil. The foil material, in the form of a master roll of graphite foil is first cut into a plurality of small width rolls. Each individual roll is then texturized across its width to enhance its strength, which makes it less brittle, in an apparatus that compresses the roll at regular intervals along its length. The texturized roll is then slit into thin strands, generally less than about 0.1 inches in width in a slitter. A plurality of strands are then fed in together in a commercial overwrapping machine and wrapped with yarn to form a single strand. The overwrapping machine can alternatively be a filament winding or a braiding machine. The overwrapped material is then coated with graphite, carbon or PTFE based sealants or lubricants and dried.

The present invention also comprises an article of manufacture comprising a plurality of continuous strips or ribbons of flexible graphite foil, texturized for strength and flexibility, wrapped with a yarn or wire, and coated with a liquid carbon or graphite solution.

It is an object of the present invention to provide a braidable packing material made of continuous graphite foil ribbons to avoid the problems associated with making such material from short strips.

It is another object of the present invention to provide a process and a material for making a braided packing material made of continuous graphite which enables the graphite foil to be braided without substantial breakage.

These and other objects of the present invention may be understood by reference to the drawings and specification set forth below. It will be understood, however, that the present invention is not limited to the specific embodiments shown in the appended drawings or described in the specification, but to the devices and methods as set forth in the claims, and any equivalents thereto.

### BRIEF DESCRIPTION OF THE DRAWINGS

***Figure 1*** is a flow chart showing the process of the present invention.

***Figure 2*** is a flow chart showing the process of the present invention.

***Figure 3*** is a schematic flow chart showing the process of the present invention.

***Figure 4*** illustrates the ribbon of the present invention which has been overwrapped.

***Figure 5*** illustrates the ribbon of the present invention which has been braided.

### DETAILED DESCRIPTION OF THE INVENTION

The present invention comprises an article of manufacture, namely a gland packing material made of continuous filament graphite foil that is overwrapped, knitted or braided, and the process of making the same.

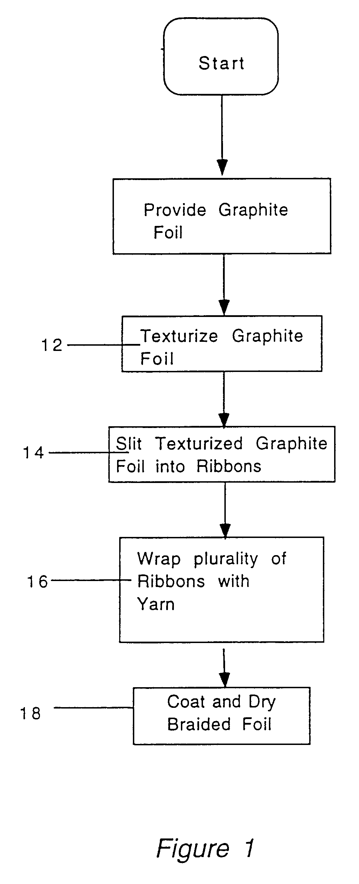

As shown in Figure 1, in its broad configuration, the process of the present invention comprises several critical steps. In the first step 12, a roll of flexible graphite foil is provided, graphite foil being well known in the art. The flexible graphite foil roll is then texturized in step 14, and the texturized graphite roll is then slit into ribbons (step 16), the ribbons being long and continuous, preferably 30 to 250 feet in length and possibly longer or shorter as desired. The ribbons are randomly grouped, preferably into a group of 3 ribbons, although more or fewer ribbons can be used, and are overwrapped with one or more strands of yarn to hold them together in step 18. The yarn can be rayon, carbon other organic or ceramic yarns (such as fiber glass), or metal wire.

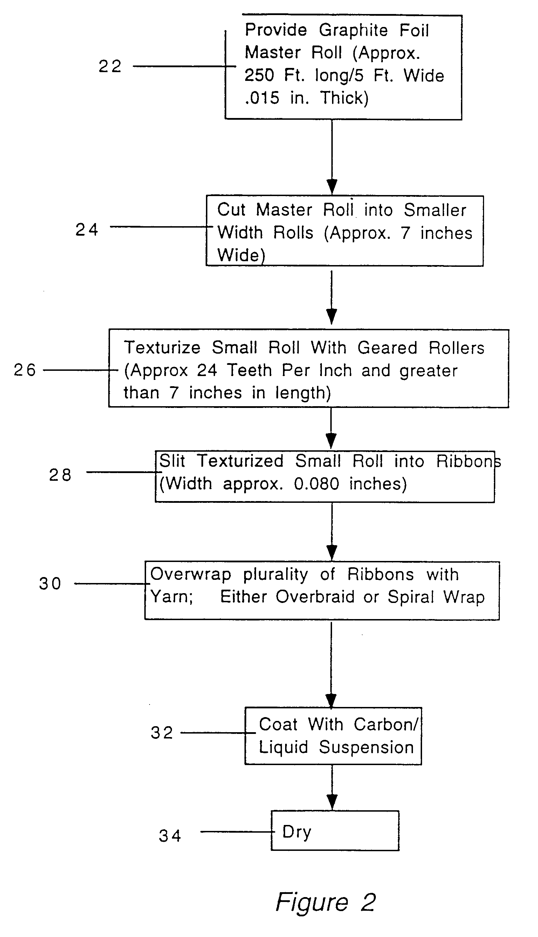

A more detailed illustration of the preferred embodiment is set forth in Figure 2. The process is started with a master roll of flexible graphite foil, which can vary in properties and characteristics, but may be approximately 250 feet long, up to approximately 5 feet in width, and preferably approximately 0.015 inches thick, with a density in the range of 44-100 lbs., and preferably about 70 lbs. per cubic foot (Step 22). The thickness can be up to 0.030 inches based upon the ability of the texturizing machine described below to accommodate foil of such thickness. The master roll is first cut into narrow rolls about 7 inches wide, depending upon the equipment available (Step 24), to make it easy to handle the rolls, although it will be appreciated that this first cut can be any width. The narrow roll is then texturized by passing it through a texturizer (Step 26), which comprises a pair of cylinders having regularly spaced teeth on the surface, the teeth having a generally rectangular profile, and the teeth being disposed on the surface in a density of about 24 per inch. The texturizing roller is preferably slightly wider than the width of the small roll of flexible graphite. Once texturized, the flexible graphite is made substantially more durable, flexible and malleable for the overwrapping process described later.

After being texturized, the graphite foil is then slit into ribbon using a machine similar to a slitting machine, which is well-known in the industry, with a plurality of closely disposed wheel blades (step 28). The width of the ribbon is about 0.080 inches, although this width can vary somewhat without departing from the spirit and scope of the present invention. A plurality of individual ribbons are then brought together in an overwrapping machine which is commercially available, such as a Wardwell or a Graham SCR. Alternatively, a knitting machine such as the type available from Lamb may be used. Such machines overwrap or spiral wrap a yarn around the graphite ribbon (Step 30). The wrapping machine can also be arranged to provide an alternative direction wrap as well. Utilizing any of the foregoing wrapping or braiding machines, the graphite foil can be wrapped or braided with one or more strands of yarn. The yarn, which may be wire as described above, increases the strength of the ribbon of the present invention.

The wrapped material is taken up on a spool and then treated with a carbon or graphite suspension (Step 32). The material is drawn through the coating and immediately passed through an oven to dry the coating (Step 34). The temperature and residence time are suitable to dry the material.

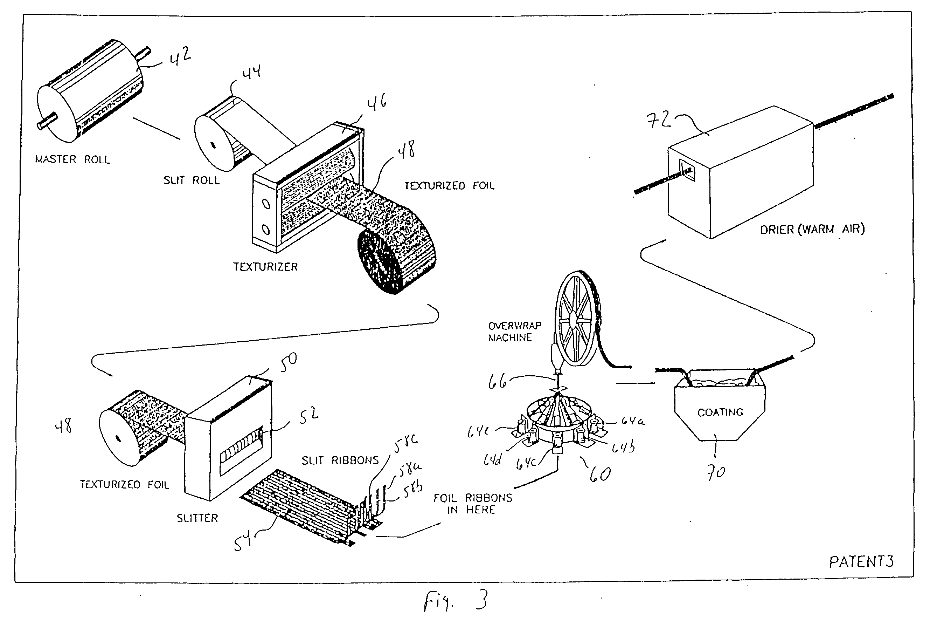

Figure 3 is a schematic showing the steps of the process of the present invention. In Figure 3, the inventive process starts with the master roll 42 of graphite foil sheeting which is then cut into a narrow roll 44. The graphite foil sheeting of the smaller roll 44 is then passed between the texturizing rollers 46 having a plurality of teeth, preferably about 24 per inch, to form a texturized graphite foil 48. The texturized graphite foil 48 is then passed through a gang slitter 50 comprising a plurality of rotary blades 52 which slit the texturized graphite foil 48 into a texturized slit sheet 54 or roll of graphite foil ribbons having a width of about .080 inches, and a length of 250 feet or less, although it could be longer depending upon the desired handleability of the material.

The graphite ribbon rolls 58a, 58b and 58c, for example, are used to provide the graphite ribbon to an overwrapping, braiding or knitting machine 60. The graphite ribbon 62 is wrapped with yarn 64a-e to form a wrapped graphite ribbon 66. The wrapped graphite ribbon 66 may thereafter be overwrapped in the opposite direction to form a doubled-wrapped graphite ribbon. This double-wrapped, or the single wrapped graphite ribbon, whichever is desired, is then coated in a coating suspension 70 and dried in a hot air drier 72.

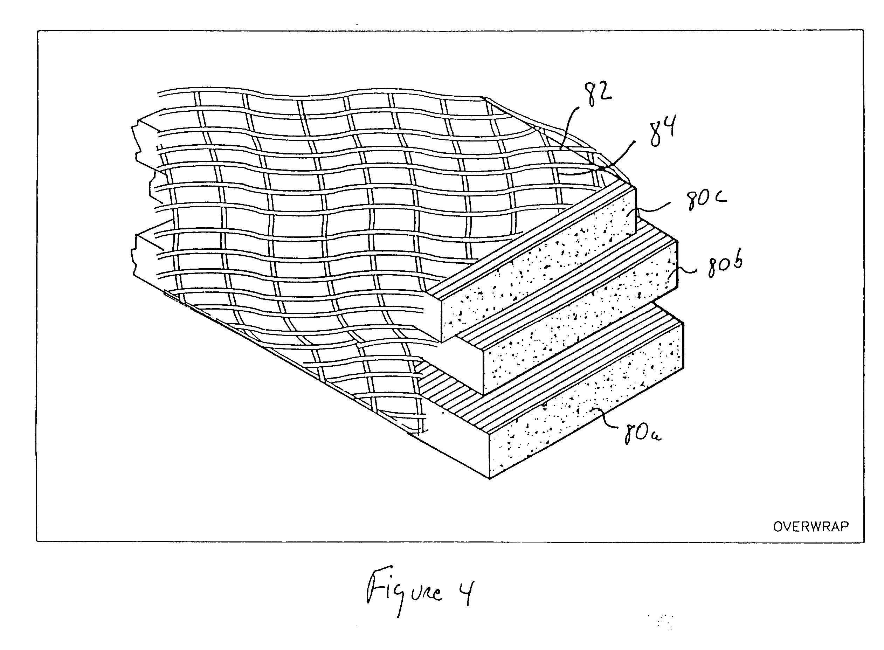

Figure 4 illustrates an overwrap form of the present invention in a partial cutaway view. As shown there are 3 layers of graphite foil 80a, 80b, and 80c, superimposed on one another. The graphite foil is texturized laterally across its surface as previously described. Covering the foil is a first plurality of strands of yarn 82 wrapped around the foil in a first direction, and a second plurality of strands of yarn 84 wrapped in a second direction around to foil. It will be noted that in this embodiment the first plurality of strands of yarn 82 wrap over the second plurality.

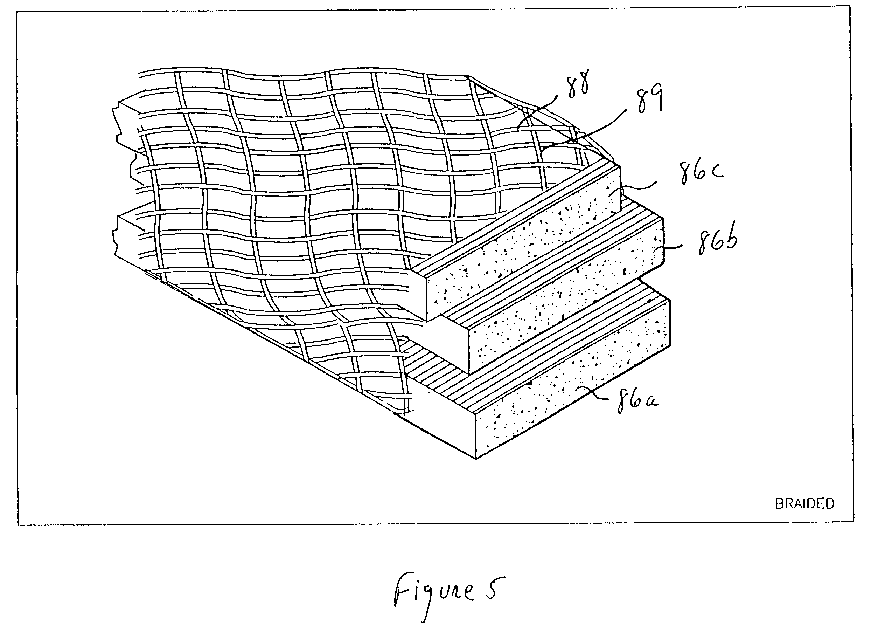

Figure 5 illustrates a braided form of the present invention in a partial cutaway view. As shown there are 3 layers of graphite foil 86a, 86b, and 86c, superimposed on one another. The graphite foil is texturized laterally across its surface as previously described. Covering the foil is a first plurality of strands of yarn 88 wrapped around the foil in a first direction, and a second plurality of strands of yarn 89 wrapped in a second direction around to foil. It will be noted that in this embodiment the first plurality of strands of yam 88 is braided with the second plurality 89.

As alternative configurations, the ribbon could be a square braid, which is the preferred embodiment because the corners add strength to the material. Alternatively, the ribbon could be in the form of a spiral wrap which could have one or more an additional strands of yarn running along side the foil or between the layers of foil, in order to increase the strength of the material.

It will be appreciated by persons of skill in the art that other designs and processes to implement the present invention can be used without departing from the spirit and scope of the present invention.

## Claims

1. A packing material comprising a flexible graphite foil cut into ribbons, each ribbon having a texturized surface, a plurality of said texturized ribbons being grouped together, wrapped or braided together with yarn, coated with a graphite coating which is dried onto said ribbon.

2. The packing material of claim 1 wherein said plurality of texturized ribbons are formed into a strand comprised of at least two ribbons.

3. The packing material of claim 1 wherein said graphite foil is approximately 0.015 inches thick and has a density of about 70 lbs. per cubic foot.

4. The packing material of claim 1 wherein said ribbons are about 0.08 inches in width.

5. The packing yarn of claim 1 wherein said ribbons are square wrapped together.

6. The packing yarn of claim 1 wherein said ribbons further comprise at least one strand of yarn.

7. A method of making packing yarn comprising the steps of:
providing a sheet of graphite foil;
cutting said sheet into continuous strips;
texturizing said strips of cut sheet by compressing the strips at regular and close intervals to provide said strips with increased flexibility and strength;
slitting said texturized strips into ribbons having a width of less than about 0.1 inches;
wrapping a plurality of said ribbons together;
coating said wrapped ribbons with a graphite or carbon liquid coating; and
drying said coating thereon.

8. The method of claim 7 wherein said graphite foil is disposed on a roll.

9. The method of claim 7 wherein said graphite foil has a thickness of about .015 inches and a density of about 70 lbs./cubic foot.

10. The method of claim 7 wherein said graphite strips are about 0.080 inches in width.
